# EUROPEAN PATENT APPLICATION

(11) **EP 4 582 728 A1**
(43) Date of publication of application: **09.07.2025**
(21) Application number: 25150532.7
(22) Date of filing: 07.01.2025
(51) Int. Cl.: F16M 11/04, F16M 11/18, F16M 11/20, F16M 13/02

(54) **TELEVISION MOUNT WITH HANDLE OPERABLE HEIGHT ADJUSTMENT**

(30) Priority: 04.01.2024 US 202463617543 P; 03.01.2025 US 202519009762
(71) Applicant: Legrand AV Inc., Eden Prairie, MN 55344 (US)
(72) Inventor: MAVES, Adam, Eden Prairie 55344 (US); QUAGLIERI, Stephen, Eden Prairie 55344 (US); MUGGE, Jimmie, Eden Prairie 55344 (US); GRUNERUD, Wyatt, Eden Prairie 55344 (US)
(74) Representative: Patentanwälte Geyer, Fehners & Partner mbB

(57) **Abstract**

A wall mount for a television or monitor includes a display interface that is selectively adjustable in height above the floor with a rotatable screw that shifts the display interface up or down depending on the direction of rotation of the screw. An extendable telescoping handle can be provided that extends below the television or monitor to enable rotational adjustment of the screw, and can be slid back within the screw so as to be stowed out of sight. The display interface can have a latch so as to be selectively removable from the remainder of the mount. The mount can include an arm assembly which may be articulated to enable free positioning of the television or monitor relative to the wall.

## Description

### RELATED APPLICATIONS

The present application claims the benefit of U.S. Provisional Application No. 63/617,543, entitled TELEVISION MOUNT WITH HANDLE OPERABLE HEIGHT ADJUSTMENT, and filed January 4, 2024, said application being hereby fully incorporated herein in its entirety by reference.

### TECHNICAL FIELD

The invention relates to mounts for televisions, and more specifically, mounts for attaching a flat panel television and related devices to a wall.

### BACKGROUND

As flat panel televisions and monitors have become more popular, there has been an increasing need to mount them to a wall to avoid using furniture to support the device, which takes up floor space. Also, it is often desirable to position the television more precisely for optimum viewing and sound, and for aesthetic reasons. Various types of mounts have been developed for these purposes. For example, U.S. Patent No. 8,693,172 which is owned by the owners of the present invention and hereby fully incorporated herein by reference, discloses a full-motion mount for attaching a television to a wall. The mount enables the television to be tilted, pivoted side-to-side, and moved closer to or further away from the wall as desired.

A drawback of existing full-motion television mounts, however, is that vertical height adjustment of the television is only accomplished where the television attaches to the mount. This is usually accomplished through two separate adjustments. This causes additional time for installation, and limits flexibility of installation.

What is needed is a full-motion television mount that addresses the drawbacks of prior mounts.

### SUMMARY

Disclosed herein are embodiments of a full-motion television mount that address the drawbacks of prior mounts. According to embodiments of the invention a wall mount for a television or monitor includes a display interface that is selectively adjustable in height above the floor with a rotatable screw that shifts the display interface up or down depending on the direction of rotation of the screw. An extendable telescoping handle can be provided that extends below the television or monitor to enable rotational adjustment of the screw, and can be slid back within the screw so as to be stowed out of sight. The display interface can have a latch so as to be selectively removable from the remainder of the mount. The mount can include an arm assembly which may be articulated to enable free positioning of the television or monitor relative to the wall.

According to an embodiment, a mount for attaching a television or monitor to a wall includes a wall interface assembly adapted to attach to the wall, an arm assembly presenting a first end and a second opposing end, the first end operably coupled to the wall interface assembly a receiving bracket operably coupled to the second end of the arm assembly, and a display interface adapted to receive the television or monitor. The display interface includes a display attachment assembly, and a height adjustment assembly operably coupling the receiving bracket and the display attachment assembly. The height adjustment assembly includes an elongate guide, and a carrier assembly operably coupled with the receiving bracket. The elongate guide is engaged with the carrier assembly such that the elongate guide is vertically slidable on the carrier assembly. The carrier assembly includes a nut. The height adjustment assembly further includes an adjustment screw coupled to the elongate guide and threadedly engaged with the nut of the carrier assembly, the adjustment screw rotatable to cause vertical shifting of the elongate guide on the carrier assembly, wherein the display attachment assembly is translated upward or downward relative to the arm assembly depending on the direction of rotation of the adjustment screw.

In embodiments, the adjustment screw defines a longitudinal bore, and the height adjustment assembly further includes a telescoping handle assembly having an elongate shaft portion and a grip portion, the elongate shaft portion received and selectively slidable in the longitudinal bore, the telescoping handle assembly being rotationally fixed to the adjustment screw such that rotation of the grip portion rotates the adjustment screw. The carrier assembly can include a latch, the latch operable to selectively secure the carrier assembly to the receiving bracket.

In embodiments, the display attachment assembly includes a pair of spaced-apart horizontal crossbars and a pair of spaced-apart vertical uprights, the vertical uprights adapted to attach to the television or monitor, the crossbars operably coupled to the elongate guide. Each of the spaced-apart vertical uprights can be separately selectively shiftable on the spaced-apart horizontal crossbars.

The arm assembly can include a single arm. at least one articulating arm, or a pair of articulating arms. The mount can include a tilt head assembly operably coupling the receiving bracket and the carrier assembly, the tilt head assembly arranged to enable selective tilting of the display interface about a virtual tilt axis spaced-apart forwardly from the display interface.

In embodiments, the tilt head assembly can include a pair of followers and a pair of guide slots, each one of the pair of followers engaged in a separate one of the pair of guide slots. The guide slots may be symmetrical with the virtual tilt axis being fixed in position relative to the display interface, or the guide slots may be asymmetrical such that the virtual tilt axis shifts with an instantaneous center of rotation of the receiving bracket.

In further embodiments, an electronic display system includes a television or monitor, and a mount. The mount includes a wall interface assembly adapted to attach to a wall, an arm assembly presenting a first end and a second opposing end, the first end operably coupled to the wall interface assembly, a receiving bracket operably coupled to the second end of the arm assembly, and a display interface receiving the television or monitor. The display interface includes a display attachment assembly, and a height adjustment assembly operably coupling the receiving bracket and the display attachment assembly. The height adjustment assembly includes an elongate guide, a carrier assembly operably coupled with the receiving bracket, the elongate guide engaged with the carrier assembly such that the elongate guide is vertically slidable on the carrier assembly, the carrier assembly including a nut, and an adjustment screw coupled to the elongate guide and threadedly engaged with the nut of the carrier assembly. The adjustment screw is rotatable to cause vertical shifting of the elongate guide on the carrier assembly, wherein the display attachment assembly is translated upward or downward relative to the arm assembly depending on the direction of rotation of the adjustment screw.

In embodiments, the adjustment screw defines a longitudinal bore, and the height adjustment assembly further includes a telescoping handle assembly having an elongate shaft portion and a grip portion, the elongate shaft portion received and selectively slidable in the longitudinal bore, the telescoping handle assembly being rotationally fixed to the adjustment screw such that rotation of the grip portion rotates the adjustment screw. The carrier assembly can include a latch, the latch operable to selectively secure the carrier assembly to the receiving bracket.

In embodiments, the display attachment assembly includes a pair of spaced-apart horizontal crossbars and a pair of spaced-apart vertical uprights, the vertical uprights attached to the television or monitor, the crossbars operably coupled to the elongate guide. Each of the spaced-apart vertical uprights may be separately selectively shiftable on the spaced-apart horizontal crossbars. The arm assembly can include a pair of articulating arms.

In embodiments, the system can further include a tilt head assembly operably coupling the receiving bracket and the carrier assembly, the tilt head assembly arranged to enable selective tilting of the display interface about a virtual tilt axis spaced-apart forwardly from the display interface. The tilt head assembly can include a pair of followers and a pair of guide slots, each one of the pair of followers engaged in a separate one of the pair of guide slots. The guide slots may be symmetrical with the virtual tilt axis is fixed in position relative to the display interface, or the guide slots may be asymmetrical such that the virtual tilt axis shifts with an instantaneous center of rotation of the receiving bracket.

In further embodiments, a mount for attaching a television or monitor to a wall includes a wall interface assembly adapted to attach to the wall, a receiving bracket operably coupled to the wall interface assembly, and a display interface adapted to receive the television or monitor. The display interface includes a display attachment assembly, and a height adjustment assembly operably coupling the receiving bracket and the display attachment assembly. The height adjustment assembly includes an elongate guide, a carrier assembly operably coupled with the receiving bracket, the elongate guide engaged with the carrier assembly such that the elongate guide is vertically slidable on the carrier assembly. The carrier assembly includes a nut. An adjustment screw is coupled to the elongate guide and threadedly engaged with the nut of the carrier assembly. The adjustment screw is rotatable to cause vertical shifting of the elongate guide on the carrier assembly, wherein the display attachment assembly is translated upward or downward relative to the wall interface assembly depending on the direction of rotation of the adjustment screw.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a rear isometric view of a television mount according to an embodiment of the invention;
FIG. 2 is a rear isometric view of the display interface assembly of the mount of FIG. 1;
FIG. 3 is an isometric view of the carrier assembly of the display interface assembly of FIG. 2;
FIG. 4 is a top isometric cross-sectional view of the carrier assembly of FIG. 3;
FIG. 5 is an exploded view of the vertical adjustment assembly of the display interface assembly of FIG. 2;
FIG. 6 is an exploded view of the carrier assembly of FIG. 3;
FIG. 7 is a plan view of the guide channel of the mount of FIG. 1;
FIG. 8 is an isometric exploded view of the housing of the vertical adjustment assembly of FIG. 5;
FIG. 9 is a front partial isometric view of the wall plate and arm assembly of the mount of FIG. 1 with the display interface omitted for clarity;
FIG. 10 is a partial front isometric view of the receiving/guide bracket of the tilt head assembly of the arm assembly of FIG. 9;
FIG. 11 is a front isometric view of the receiving/guide bracket of FIG. 10;
FIG. 12 is a partial front isometric view of the mount of FIG. 1;
FIG. 13 is a rear isometric view of the top cross rail of the display interface assembly of FIG. 2;
FIG. 14 is a side election view of the receiving/guide bracket of the mount of FIG. 10 with an upright and electronic display depicted in phantom, and showing tilt motion with symmetrical arcuate guide slots;
FIG. 15 is a side elevation view of the receiving/guide bracket of the mount of FIG. 10 with an upright and electronic display depicted in phantom, and showing the location of the tilt axis and instantaneous center with asymmetrical arcuate guide slots;
FIG 15A is a side elevation view of the receiving/guide bracket of FIG. 15 showing tilt motion:
FIG. 16 is a side elevation view of the receiving/guide bracket of the mount of FIG. 10 with an upright and electronic display depicted in phantom, and showing the location of the tilt axis and instantaneous center with symmetrical straight guide slots; and
FIG. 17 is a side elevation view of the receiving/guide bracket of the mount of FIG. 10 with an upright and electronic display depicted in phantom, and showing the location of the tilt axis and instantaneous center with symmetrical reverse arcuate guide slots.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by the claims.

### DETAILED DESCRIPTION OF THE DRAWINGS

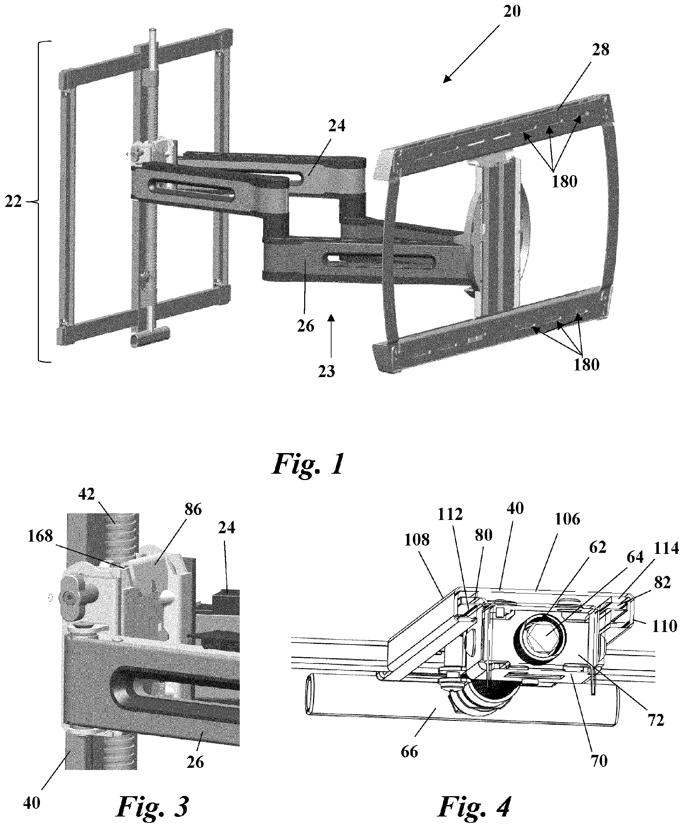

There is depicted in FIG. 1, a television mount 20 according to an embodiment of the invention. Mount 20 generally includes display interface assembly 22, arm assembly 23, including articulating swing arms 24, 26, and wall interface assembly 28. It will be appreciated that articulating swing arms 24, 26, can be replaced with any suitable arm assembly, such as a one-piece single arm or a single articulating arm, while remaining within the scope of the invention. For a non-limiting example, arm assembly 23 could be replaced with a scissors extension mechanism such as disclosed in U.S. Patent No. 8,508,918, owned by the owners of the present application, and hereby fully incorporated herein by reference.

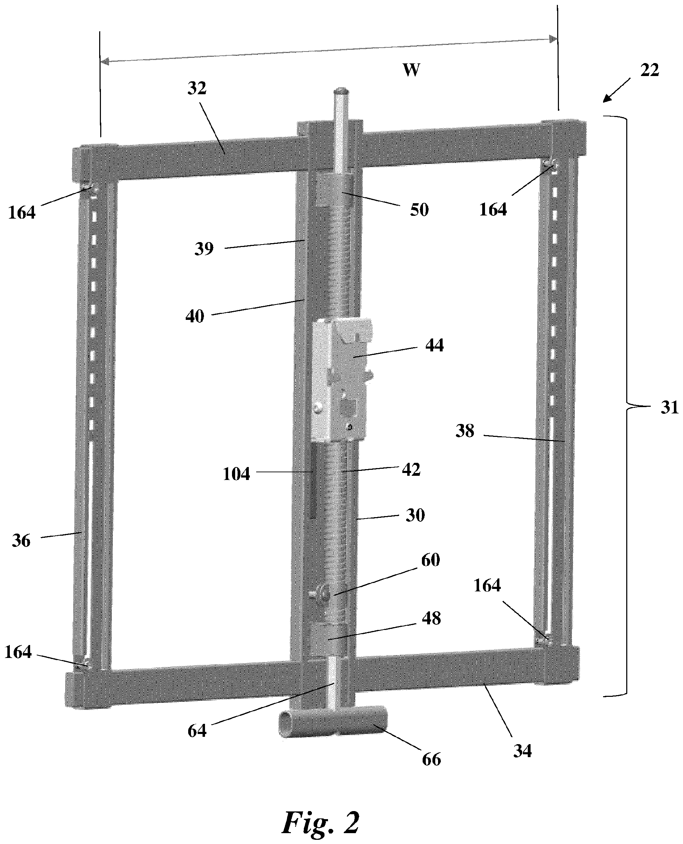

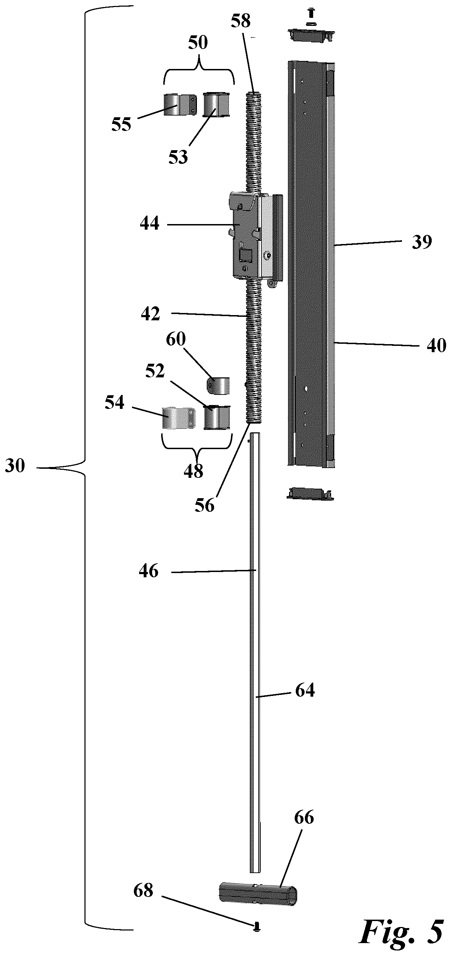

As depicted in FIG. 2, display interface assembly 22 generally includes height adjustment assembly 30, and a display attachment assembly 31 in the form of cross bars 32, 34, and uprights 36, 38. As depicted in the exploded view of FIG. 5, height adjustment assembly 30 generally includes an elongate guide 39 in the form of guide channel 40, adjustment screw 42, carrier assembly 44, telescoping handle 46, and bushing assemblies 48, 50. Bushing assembly 48 generally includes bushing 52 and retention clamp 54 and bushing assembly 50 generally includes bushing 53 and retention clamp 55. Bottom end 56 of adjustment screw 42 is rotatably received in bushing 52 and top end 58 of adjustment screw 42 is rotatably received in bushing 53 such that adjustment screw can rotate but does not translate relative to guide channel 40. Each bushing assembly 48, 50, is fixed to guide channel 40 with retention clamps 54, 55, respectively. Adjustment screw 42 is further rotatably retained on guide channel 40 with clamp 60.

Adjustment screw 42 is hollow with longitudinal bore 62. Shaft 64 of handle 46 is selectively slidably received in longitudinal bore 62. Handle 46 further includes grip portion 66, which is fixed to shaft 64 with fastener 68. Shaft 64, although longitudinally slidable in adjustment screw 42, is rotationally fixed to adjustment screw 42 so that rotation of grip portion 66 results in rotation of adjustment screw 42 in bushings 52, 53. It will be appreciated that handle 46 could be omitted and adjustment screw 42 driven by any other suitable means, such as, for non-limiting examples, a hex bolt head, Allen head, or other connection capable of receiving a tool to impart rotation.

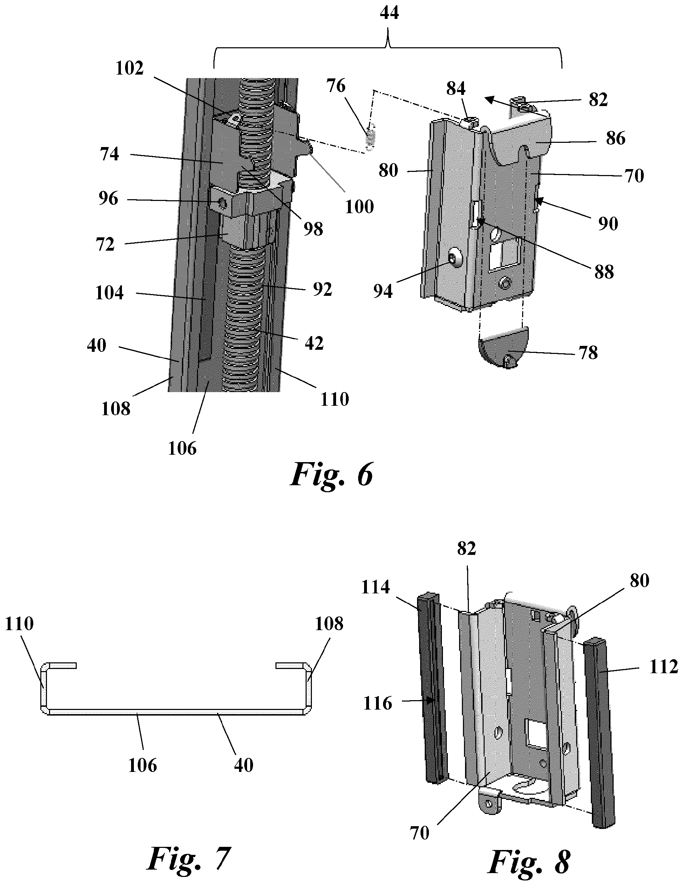

As depicted in the partially exploded view of FIG. 6, carrier assembly 44 generally includes housing 70, nut 72, latch 74, biasing spring 76, and landing pad 78. Housing 70 has laterally projecting flanges 80, 82, spring receiving tab 84, tongue 86, and defines apertures 88, 90. Landing pad 78 is received under tongue 86.

Adjustment screw 42 has exterior threads 92 which mate with interior threads (not depicted) of nut 72, so that nut 72 travels up and down along the length of adjustment screw 42 as adjustment screw 42 is rotated counterclockwise or clockwise, respectively. Nut 72 is fixed to housing 70 with fastener 94 received in aperture 96. Although not depicted, another fastener can secure housing 70 to nut 72 on the opposite side.

Latch 74 generally includes projecting hooks, 98, 100, which extend through elongate apertures 88, 90, respectively. Latch 74 is resiliently secured to housing 70 with biasing spring 76, which extends between spring receiving tab 84 and tab 102. Although not depicted, an additional biasing spring can be provided on the other side of latch 74, and would be similarly coupled. Biasing spring 76 biases latch 74 upwardly within housing 70. Pull strap 104 is coupled to latch 74 to enable latch 74 to be pulled downward against the bias of biasing spring 76, thereby causing hooks 98, 100, to move downwardly in apertures 88, 90.

As depicted in FIGs. 4, 6, and 7, guide channel 40 has backplane 106 and c-shaped side portions 108, 110, such that guide channel 40 has a c-shaped cross section. As depicted in FIGs. 4 and 8, housing 70 includes bushings 112, 114. Each bushing 112, 114, has slot 116 which enables bushings 112, 114, to fit over flanges 80, 82, of housing 70, respectively. Bushings 112, 114, fit into c-shaped side portions 108, 110, such that housing 70 is smoothly slidable in guide channel 40.

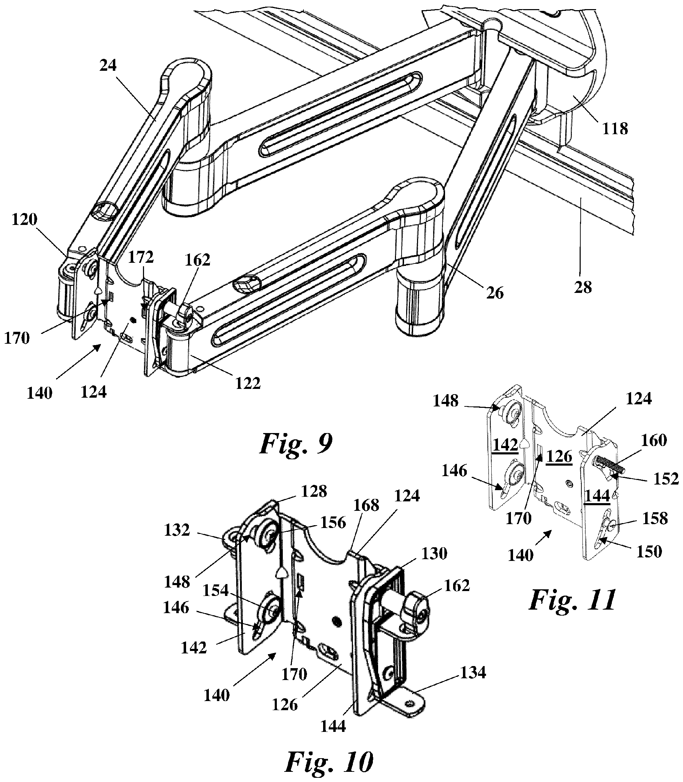

As depicted in FIG. 9, articulating swing arms 24, 26 are pivotally coupled to wall plate 28 at connector portion and are pivotally coupled to tilt head assembly 124 at distal ends 120, 122. As depicted in FIGs. 9-11, tilt head assembly 124 generally includes receiving/guide bracket 126, carrier plates 128, 130, guide followers 132, 134, and arm connection brackets 136, 138. Receiving/guide bracket 126 is generally u-shaped, forming forward facing recess 140. Each of sidewalls 142, 144, defines a pair of guide slots 146, 148, and 150, 152, respectively. Followers 154, 156, extend through guide slots 146, 148, respectively, and are slidable or rollable therein. Followers 154, 156 are carried by carrier plate 128. Followers 158, 160, extend through guide slots 150, 152, respectively, and are slidable or rollable therein. Followers 158, 160 are carried by carrier plate 130. Follower 160 is threaded and receives friction knob 162, to enable follower 160 to be tightened or loosened to add or remove friction resisting movement of the follower in the guide slot.

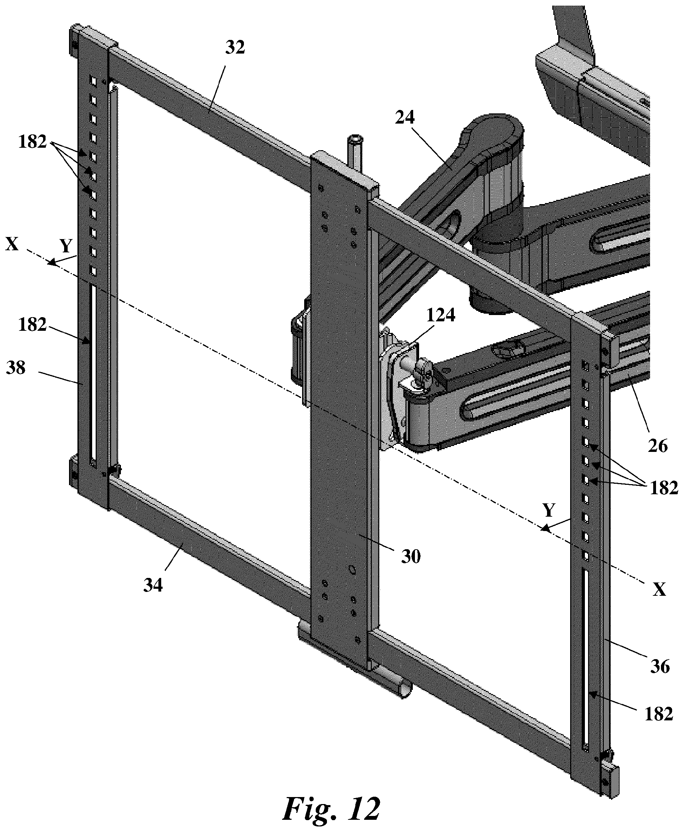

Guide slots 146, 148, 150, 152, can be configured so as to define a virtual horizontal tilt axis X-X positioned forwardly a distance Y from display interface 22 as depicted in FIG. 12. Virtual tilt axis X-X passing through an attached display 184 can enable the display 184 attached to display interface 22 to maintain a tilt position without excessive friction being added via friction knob 162, thus improving ease of use. It will be appreciated that guide slots 146, 148, 150, 152, can be curved, straight, or any other shape facilitating the desired effect while remaining within the scope of the invention.

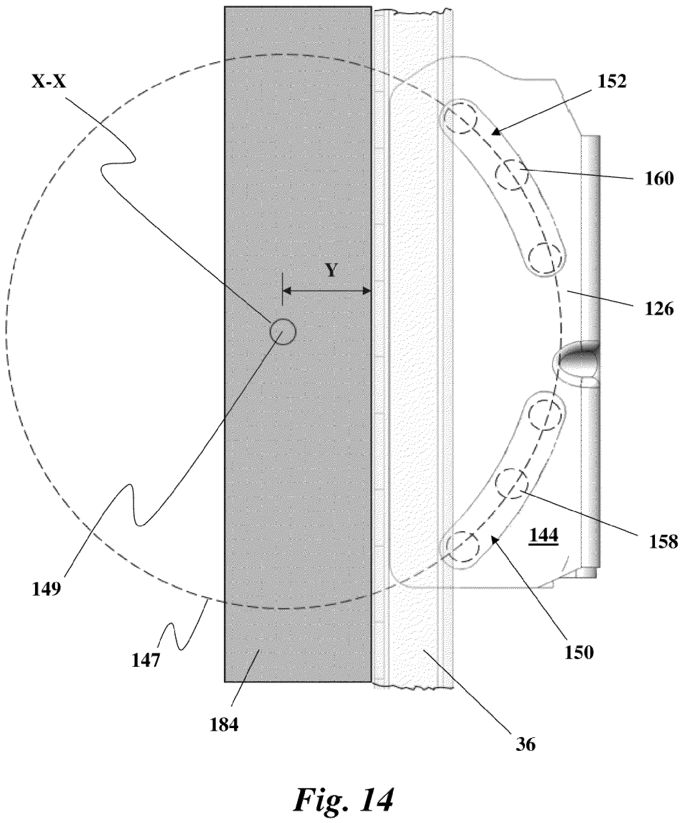

As depicted in the example of FIG. 14, guide slots 146, 148, 150, 152, can be disposed along the circumference of a circle 147 with a center 149 coinciding with virtual axis X-X. As depicted in this partial right-side elevation view, guide slots 150, 152, are symmetrical and their radius of curvature centers on center 149. Guide slots 150, 152, will slide over followers 158, 160, enabling receiving/guide bracket 126, uprights 36, 38, and an attached display 184 to tilt about virtual tilt axis X-X, which will remain stationary.

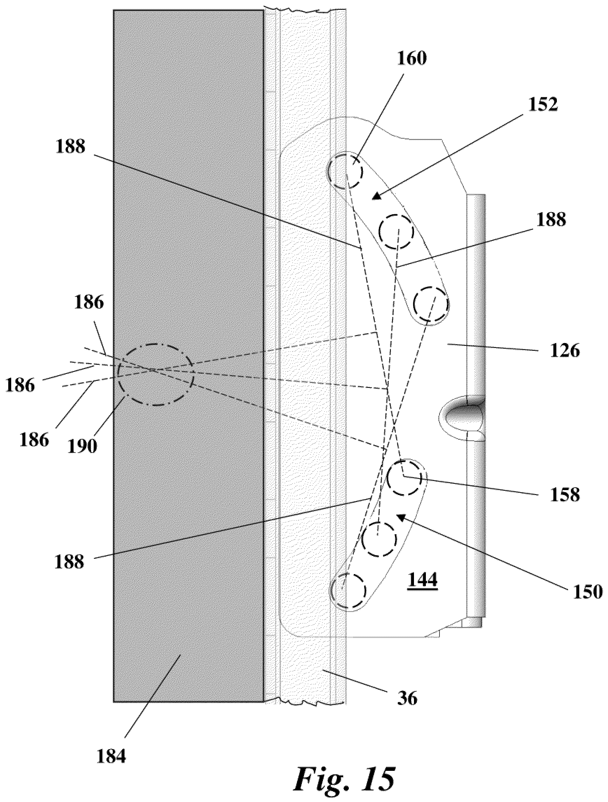

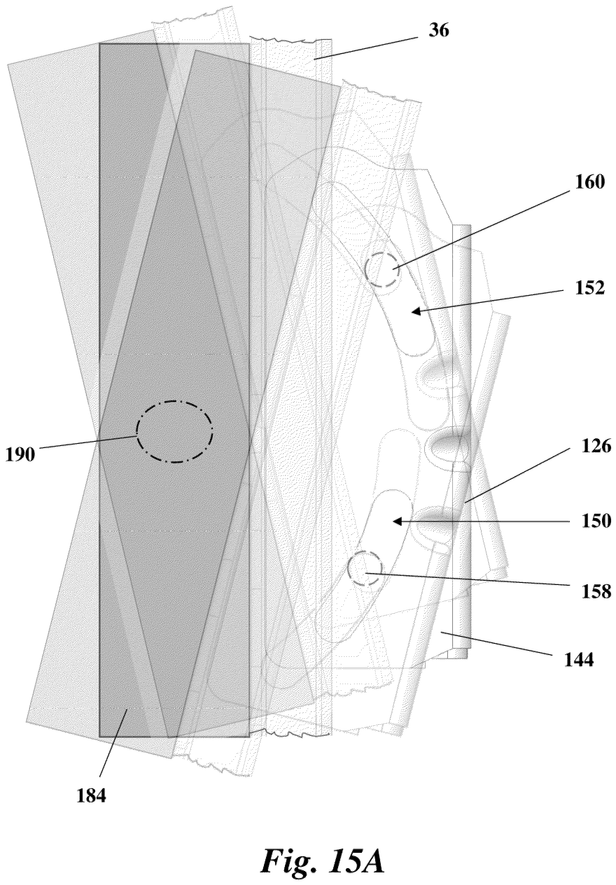

Other examples of different slot configurations are depicted in FIGs. 15-17. In FIGs. 15 and 15A, guide slots 150, 152, are arcuate, but have different lengths and are not disposed symmetrically. With this configuration, as depicted in FIG. 15A, receiving/guide bracket 126, uprights 36, 38, and attached display 184 will tilt about an instantaneous center according to well-known principles of machine kinematics. Followers 158, 160, are located a fixed distance apart and are essentially fixed in position relative to carrier plates 128, 130, and articulating swing arms 24, 26. As a result, the instantaneous center of tilting motion of receiving/guide bracket 126 will lie along a line 186 perpendicular to the midpoint of a line 188 drawn between the relative positions of followers 158, 160, in guide slots 150, 152, within the range of tilt motion of receiving/guide bracket 126. As depicted in FIG. 15, the region 190 within which lines 186 intersect will mark the approximate location of the instantaneous center. Virtual tilt axis X-X can be conceptualized as shifting continuously during the tilt motion of receiving/guide bracket 126, and positioned at points within region 190.

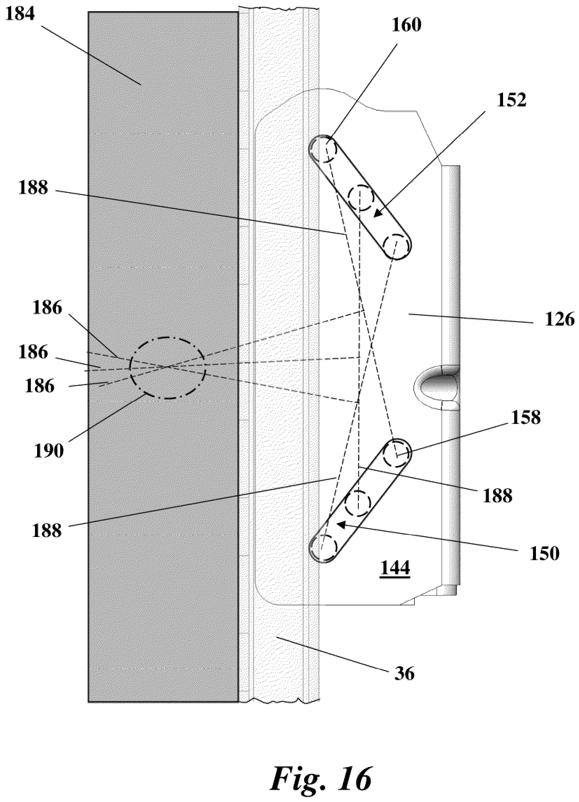

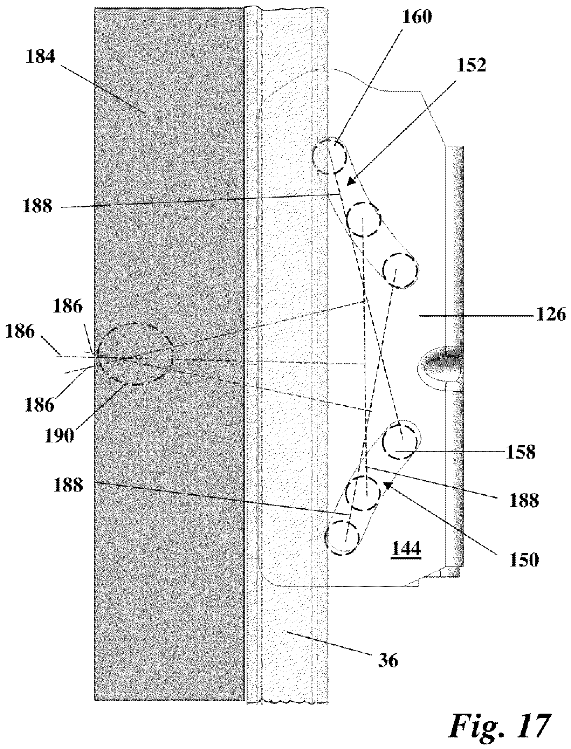

Similarly, FIG. 16 depicts guide slots 150, 152, as being straight, and FIG. 17 depicts guide slots 150, 152, as being arcuate, but curved in the opposite direction from guide slots 150, 152, of FIG. 14. In these instances, receiving/guide bracket 126 will tilt about an instantaneous center disposed within region 190.

Hence, it will be appreciated that guide slots 146, 148, 150, 152, can be virtually any shape or geometry enabling tilt motion of receiving/guide bracket 126 about a virtual tilt axis X-X, and which may be embodied by a shifting instantaneous center. It will be further appreciated that the geometry of guide slots 146, 148, 150, 152, can be such that a greater or lesser tilt range (e.g. 5 to 15 degrees) is provided at the top of display interface 22 relative to the bottom.

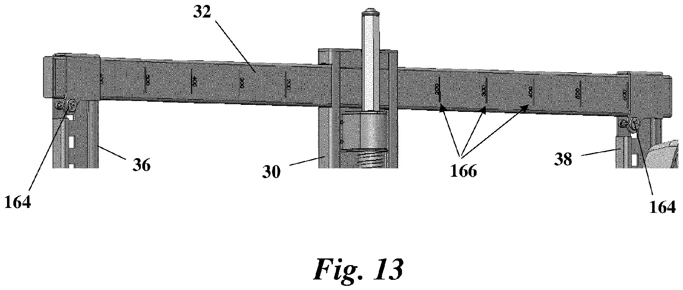

As depicted in FIGs. 2 and 13, the position of uprights 36, 38, of display interface 22 can be shifted along cross bars 32, 34, to accommodate attachment hole spacing of displays of varying width W. To shift uprights 36, 38, fasteners 164 can be loosened, uprights 36, 38, slid the desired position on cross bars 32, 34, and fasteners 164 retightened. Indicia 166 can be provided on cross bars 32, 34, (e.g. 200, 300, 400, etc. mm) to enable easy location to match the VESA pattern of holes on the display.

As depicted in FIG. 3, display interface 22 is detachably coupled to tilt head assembly 124. To accomplish coupling, housing 70 is advanced into recess 140, and tongue 86 hooked over top edge 168 of receiving/guide bracket 126. Hooks, 98, 100, of latch 74 will engage in apertures 170, 172, defined in receiving/guide bracket 126, and be pulled upward by biasing spring(s) 76 to latch display interface 22 in place. Display interface 22 can be disengaged by pulling downward on pull strap 104 to move latch 74 downward against the bias of biasing spring(s) 76, and lifting display interface 22 and an attached display upward to disengage tongue 86 from top edge 168 of receiving/guide bracket 126.

In use, wall bracket 28 with attached arms 24, 26, and tilt head assembly 124 can be attached to a wall with suitable fasteners (not depicted) through apertures 180. Display interface 22 can be adjusted for suitable width W as described above, and attached to the rear of an electronic display 184, such as a television or monitor, with fasteners (not depicted) through apertures 182 in uprights 36, 38. Then, display interface 22 and the display can be coupled to tilt head assembly 124 as also described above. The height of the television or monitor and display interface 22 can then be height-adjusted relative to the floor and the remainder of mount 20 by pulling downward on grip portion 66 of handle 46 to extend shaft 64 from adjustment screw 42. Grip portion 66 can then be rotated, which due to the connection between shaft 64 and adjustment screw 42, will cause adjustment screw 42 to rotate. Adjustment screw 42 and elongate guide 39 will translate up or down relative to carrier assembly 44, due to the threaded engagement of nut 72 with adjustment screw 42, depending on the direction of rotation. Once the desired height position from the floor is reached, grip portion 66 and shaft 64 can be slid back into adjustment screw 42 so as to be concealed.

Hence, the embodiments described provide a convenient way of adjusting the height of a wall mounted television or monitor about the floor with a single adjustment. This solution can be applied to any mount, whether provided with an arm assembly capable of pivoting or not, and whether or not the mount is provided with tilt capability.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that the provisions of 35 U.S.C. § 112(f) are not to be invoked unless the specific terms "means for" or "step for" are recited in a claim.

The disclosure relates to a wall mount for a television or monitor includes a display interface that is selectively adjustable in height above the floor with a rotatable screw that shifts the display interface up or down depending on the direction of rotation of the screw. An extendable telescoping handle can be provided that extends below the television or monitor to enable rotational adjustment of the screw, and can be slid back within the screw so as to be stowed out of sight. The display interface can have a latch so as to be selectively removable from the remainder of the mount. The mount can include an arm assembly which may be articulated to enable free positioning of the television or monitor relative to the wall.

The present application and invention further includes the subject-matter of the following numbered clauses:
1. A mount for attaching a television or monitor to a wall, the mount comprising:
   a wall interface assembly adapted to attach to the wall;
   an arm assembly presenting a first end and a second opposing end, the first end operably coupled to the wall interface assembly;
   a receiving bracket operably coupled to the second end of the arm assembly; and
   a display interface adapted to receive the television or monitor, the display interface comprising:
      a display attachment assembly; and
      a height adjustment assembly operably coupling the receiving bracket and the display attachment assembly, the height adjustment assembly including:
         an elongate guide;
         a carrier assembly operably coupled with the receiving bracket, the elongate guide engaged with the carrier assembly such that the elongate guide is vertically slidable on the carrier assembly, the carrier assembly including a nut; and
         an adjustment screw coupled to the elongate guide and threadedly engaged with the nut of the carrier assembly, the adjustment screw rotatable to cause vertical shifting of the elongate guide on the carrier assembly, wherein the display attachment assembly is translated upward or downward relative to the arm assembly depending on the direction of rotation of the adjustment screw.
2. The mount of clause 1, wherein the adjustment screw defines a longitudinal bore, and the height adjustment assembly further includes a telescoping handle assembly having an elongate shaft portion and a grip portion, the elongate shaft portion received and selectively slidable in the longitudinal bore, the telescoping handle assembly being rotationally fixed to the adjustment screw such that rotation of the grip portion rotates the adjustment screw.
3. The mount of clause 1, wherein the carrier assembly includes a latch, the latch operable to selectively secure the carrier assembly to the receiving bracket.
4. The mount of clause 1, wherein the display attachment assembly comprises a pair of spaced-apart horizontal crossbars and a pair of spaced-apart vertical uprights, the vertical uprights adapted to attach to the television or monitor, the crossbars operably coupled to the elongate guide.
5. The mount of clause 4, wherein each of the spaced-apart vertical uprights is separately selectively shiftable on the spaced-apart horizontal crossbars.
6. The mount of clause 1, wherein the arm assembly comprises a single arm.
7. The mount of clause 1, wherein the arm assembly comprises at least one articulating arm.
8. The mount of clause 1, wherein the arm assembly comprises a pair of articulating arms.
9. The mount of clause 1, further comprising a tilt head assembly operably coupling the receiving bracket and the carrier assembly, the tilt head assembly arranged to enable selective tilting of the display interface about a virtual tilt axis spaced-apart forwardly from the display interface.
10. The mount of clause 9, wherein the tilt head assembly comprises a pair of followers and a pair of guide slots, each one of the pair of followers engaged in a separate one of the pair of guide slots.
11. The mount of clause 10, wherein the guide slots are symmetrical and the virtual tilt axis is fixed in position relative to the display interface.
12. The mount of clause 10, wherein the guide slots are asymmetrical and the virtual tilt axis shifts with an instantaneous center of rotation of the receiving bracket.
13. An electronic display system, the system comprising:
   a television or monitor;
   a mount comprising:
      a wall interface assembly adapted to attach to a wall;
      an arm assembly presenting a first end and a second opposing end, the first end operably coupled to the wall interface assembly;
      a receiving bracket operably coupled to the second end of the arm assembly; and
      a display interface receiving the television or monitor, the display interface comprising:
         a display attachment assembly; and
         a height adjustment assembly operably coupling the receiving bracket and the display attachment assembly, the height adjustment assembly including:
            an elongate guide;
            a carrier assembly operably coupled with the receiving bracket, the elongate guide engaged with the carrier assembly such that the elongate guide is vertically slidable on the carrier assembly, the carrier assembly including a nut; and
            an adjustment screw coupled to the elongate guide and threadedly engaged with the nut of the carrier assembly, the adjustment screw rotatable to cause vertical shifting of the elongate guide on the carrier assembly, wherein the display attachment assembly is translated upward or downward relative to the arm assembly depending on the direction of rotation of the adjustment screw.
14. The system of clause 13, wherein the adjustment screw defines a longitudinal bore, and the height adjustment assembly further includes a telescoping handle assembly having an elongate shaft portion and a grip portion, the elongate shaft portion received and selectively slidable in the longitudinal bore, the telescoping handle assembly being rotationally fixed to the adjustment screw such that rotation of the grip portion rotates the adjustment screw.
15. The system of clause 13, wherein the carrier assembly includes a latch, the latch operable to selectively secure the carrier assembly to the receiving bracket.
16. The system of clause 13, wherein the display attachment assembly comprises a pair of spaced-apart horizontal crossbars and a pair of spaced-apart vertical uprights, the vertical uprights attached to the television or monitor, the crossbars operably coupled to the elongate guide.
17. The system of clause 16, wherein each of the spaced-apart vertical uprights is separately selectively shiftable on the spaced-apart horizontal crossbars.
18. The system of clause 13, wherein the arm assembly comprises a pair of articulating arms.
19. The system of clause 13, further comprising a tilt head assembly operably coupling the receiving bracket and the carrier assembly, the tilt head assembly arranged to enable selective tilting of the display interface about a virtual tilt axis spaced-apart forwardly from the display interface.
20. The system of clause 19, wherein the tilt head assembly comprises a pair of followers and a pair of guide slots, each one of the pair of followers engaged in a separate one of the pair of guide slots.
21. The system of clause 20, wherein the guide slots are symmetrical and the virtual tilt axis is fixed in position relative to the display interface.
22. The system of clause 20, wherein the guide slots are asymmetrical and the virtual tilt axis shifts with an instantaneous center of rotation of the receiving bracket.
23. A mount for attaching a television or monitor to a wall, the mount comprising:
   a wall interface assembly adapted to attach to the wall;
   a receiving bracket operably coupled to the wall interface assembly; and
   a display interface adapted to receive the television or monitor, the display interface comprising:
      a display attachment assembly; and
      a height adjustment assembly operably coupling the receiving bracket and the display attachment assembly, the height adjustment assembly including:
         an elongate guide;
         a carrier assembly operably coupled with the receiving bracket, the elongate guide engaged with the carrier assembly such that the elongate guide is vertically slidable on the carrier assembly, the carrier assembly including a nut; and
         an adjustment screw coupled to the elongate guide and threadedly engaged with the nut of the carrier assembly, the adjustment screw rotatable to cause vertical shifting of the elongate guide on the carrier assembly, wherein the display attachment assembly is translated upward or downward relative to the wall interface assembly depending on the direction of rotation of the adjustment screw.

## Claims

1. A mount for attaching a television or monitor to a wall, the mount comprising:
a wall interface assembly adapted to attach to the wall;
a receiving bracket operably coupled to the wall interface assembly; and
a display interface adapted to receive the television or monitor, the display interface comprising:
a display attachment assembly; and
a height adjustment assembly operably coupling the receiving bracket and the display attachment assembly, the height adjustment assembly including:
an elongate guide;
a carrier assembly operably coupled with the receiving bracket, the elongate guide engaged with the carrier assembly such that the elongate guide is vertically slidable on the carrier assembly, the carrier assembly including a nut; and
an adjustment screw coupled to the elongate guide and threadedly engaged with the nut of the carrier assembly, the adjustment screw rotatable to cause vertical shifting of the elongate guide on the carrier assembly, wherein the display attachment assembly is translated upward or downward relative to the arm assembly depending on the direction of rotation of the adjustment screw.

2. The mount of claim 1, wherein the adjustment screw defines a longitudinal bore, and the height adjustment assembly further includes a telescoping handle assembly having an elongate shaft portion and a grip portion, the elongate shaft portion received and selectively slidable in the longitudinal bore, the telescoping handle assembly being rotationally fixed to the adjustment screw such that rotation of the grip portion rotates the adjustment screw.

3. The mount according to the above claims, wherein the carrier assembly includes a latch, the latch operable to selectively secure the carrier assembly to the receiving bracket.

4. The mount according to the above claims, wherein the display attachment assembly comprises a pair of spaced-apart horizontal crossbars and a pair of spaced-apart vertical uprights, the vertical uprights adapted to attach to the television or monitor, the crossbars operably coupled to the elongate guide.

5. The mount of claim 4, wherein each of the spaced-apart vertical uprights is separately selectively shiftable on the spaced-apart horizontal crossbars.

6. The mount according to the above claims, further comprising a tilt head assembly operably coupling the receiving bracket and the carrier assembly, the tilt head assembly arranged to enable selective tilting of the display interface about a virtual tilt axis spaced-apart forwardly from the display interface.

7. The mount of claim 6, wherein the tilt head assembly comprises a pair of followers and a pair of guide slots, each one of the pair of followers engaged in a separate one of the pair of guide slots.

8. The mount of claim 7, wherein the guide slots are symmetrical and the virtual tilt axis is fixed in position relative to the display interface.

9. The mount of claim 7, wherein the guide slots are asymmetrical and the virtual tilt axis shifts with an instantaneous center of rotation of the receiving bracket.

10. The mount according to the above claims, further comprising an arm assembly presenting a first end and a second opposing end, the first end operably coupled to the wall interface assembly, and the receiving bracket operably coupled to the second end of the arm assembly.

11. The mount of claim 10, wherein the arm assembly comprises at least one articulating arm.

12. The mount of claim 10 or 11, wherein the arm assembly comprises a single arm.

13. The mount of claim 10 or 11, wherein the arm assembly comprises a pair of articulating arms.

14. An electronic display system, the system comprising:
a television or monitor and the mount according to the above claims, with the display interface receiving the television or monitor.
